# EUROPÄISCHE PATENTANMELDUNG

(11) **EP 1 253 365 A1**
(43) Veröffentlichungstag der Anmeldung: **30.10.2002**
(21) Anmeldenummer: 02008941.3
(22) Anmeldetag: 22.04.2002
(51) Int. Cl.: F16L 11/12

(54) **Schlauch**

(30) Priorität: 25.04.2001 DE 10120266
(71) Anmelder: VERITAS AG, 63571 Gelnhausen (DE)
(72) Erfinder: Trinkler, Thomas, 63571 Gelnhausen (DE); Spengler, Ronny, 63628 Bad Soden-Salmünster (DE); Hehl, Uwe, 63571 Gelnhausen (DE)
(74) Vertreter: Grünecker, Kinkeldey, Stockmair & Schwanhäusser Anwaltssozietät

(57) **Zusammenfassung**

Die Erfindung bezieht sich auf einen Schlauch (1), vorzugsweise Krümmerschlauch für Kraftfahrzeuge, der eine Außenfläche (6) und ein Schlauchende (3) sowie an der Außenfläche (6) zumindest eine Markierung (4) aufweist, die vom Schlauchende (3) beabstandet ist, und mit einer auf das Schlauchende (3) aufgeschobenen Hülse (7), die die Außenfläche abschnittsweise übergreift. Um die Montage auf dem Schlauch (1) und die Herstellung des Schlauchs selbst zu vereinfachen, ist erfindungsgemäß vorgesehen, dass die Markierung (4) wenigstens abschnittsweise gegenüber der Außenfläche vorsteht oder zurückgezogen ausgebildet ist und bei korrekt aufgeschobener Hülse (7) entweder die Markierung (4) benachbart zur Hülse (7) vollständig sichtbar oder vollständig durch die Hülse (7) verdeckt ist.

## Beschreibung

Die vorliegende Erfindung bezieht sich auf einen Schlauch, vorzugsweise Krümmerschlauch für Kraftfahrzeuge, der eine Außenfläche und ein Schlauchende, sowie zumindest eine Markierung an der Außenfläche aufweist, die vom Schlauchende beabstandet ist, und mit einer auf das Schlauchende aufgeschobenen Hülse, die die Außenfläche abschnittsweise übergreift.

Derartige Schläuche sind z. B. aus der DE 38 36 824 bekannt. Bei dem Schlauch kann es sich z. B. um einen Krümmerschlauch für Kraftfahrzeuge handeln. Solche Krümmerschläuche sind zumeist mehrschichtig aufgebaut, wobei zumindest die äußere Schicht, die die Außenfläche aufweist, aus einem elastomeren Material besteht. Bei der Hülse kann es sich z. B. um ein Anschlussstück oder eine Kupplungshülse handeln. Im Gegensatz zu den Schläuchen bestehen die Hülsen zumeist aus metallischen Werkstoffen und werden von den Schläuchen separat hergestellt und anschließend auf die Schlauchenden aufgeschoben. Um einen korrekten Sitz der Hülse auf dem Schlauch überprüfen zu können, befinden sich auf dem Krümmerschlauch aufgedruckte Markierungen. Bei vollständig aufgeschobener Hülse werden hierbei die Markierungen teilweise abgedeckt. Durch die teilweise abgedeckte Markierung kann die axiale Positionierung der Hülse auf dem Schlauch überprüft werden. Zum Anbringung der Markierung ist jedoch ein zusätzlicher Fertigungsschritt, nämlich das Aufdrucken, bei der Herstellung des Schlauchs erforderlich. Ein Werker, der die Hülse auf den Schlauch schieben soll, muss die Markierung zunächst optisch erfassen. Da solche Markierungen sehr leicht verschmutzen, ist die Wiedererkennung häufig erschwert.

Aufgabe der Erfindung ist es daher, einen Schlauch der eingangs genannten Art zu verbessern, so dass einerseits die Herstellung des Schlauchs vereinfacht und andererseits eine korrekte Positionierung der aufgeschobenen Hülse gewährleistet werden kann.

Die Aufgabe wird erfindungsgemäß gelöst durch einen Schlauch der eingangs genannten Art, bei dem die Markierung wenigstens abschnittsweise gegenüber der Außenfläche vorstehend oder zurückgezogen ausgebildet ist und bei korrekt aufgeschobener Hülse entweder die Markierung benachbart zu Hülse vollständig sichtbar oder vollständig durch die Hülse verdeckt ist.

Diese Lösung ist einfach und hat den Vorteil, dass nunmehr die Markierung gleichzeitig mit dem Fertigstellen des Schlauches angebracht werden kann. So kann die Markierung z. B. während der Vulkanisation also der Verarbeitung des Schlauchmaterials eingearbeitet werden. Aufwendige Druckverfahren zum Anbringen von Markierungen sind somit nicht erforderlich. Zudem eignet sich die erfindungsgemäße Gestaltung der Markierung insbesondere zur manuellen Montage, da die Lage der Markierung vom Werker durch den Tastsinn aufgefunden werden kann. Die Markierung hebt sich deutlich gegenüber der Außenfläche ab. Da die Markierung bei aufgeschobener Hülse vollständig sichtbar, jedoch benachbart der Hülse angeordnet ist, kann die Position der Hülse leicht überprüft werden. Zudem sind keine Änderungen an der Hülse erforderlich, um die erfindungsgemäße Gestaltung der Markierung zuzulassen. Je nach der Gestaltung der Hülse kann die Markierung bei korrekt aufgeschobener Hülse auch vollständig in der Hülse aufgenommen sein. So kann die Hülse z. B. eine Aufnahme für die Markierung aufweisen. In diesem Fall kann die Markierung zusätzlich auch noch Aufschluss über die Lage der Hülse in Umfangsrichtung auf dem Schlauch liefern. Die neuartige Markierung lässt sich zudem mit größerer Genauigkeit am Schlauch anbringen als bei herkömmlichen Druckverfahren. Dadurch ergibt sich ein genaueres Ausrichten des Schlauchs in axialer Richtung wie auch in Umfangsrichtung. Auch lässt sich dadurch der Prüfaufwand reduzieren.

In einer vorteilhaften Weiterbildung der Erfindung kann die Markierung gegenüber der Außenfläche vorstehen. Durch eine vorstehende Gestaltung der Markierung wird der Querschnitt des Schlauchs im Bereich der Markierung nicht geschwächt. Zudem lässt sich die Markierung dann auch gleichzeitig als Verdrehsicherung einsetzen.

Um eine Ausrichtung der Hülse auf den Schlauch vornehmen zu können, kann es sich als vorteilhaft erweisen, wenn die Hülse in Umfangsrichtung des Schlauchs zumindest während des Aufschiebens verdrehbar ist, lässt sich während des Aufschiebens ein Ausrichten der Hülse in Umfangsrichtung durchführen.

Von Vorteil kann es zudem sein, wenn der Abstand zwischen Markierung und Hülse bei aufgeschobener Hülse höchstens einen Millimeter beträgt. Dadurch lässt sich die Hülse recht genau positionieren. Das Positionieren der Hülse kann jedoch auch dermaßen erfolgen, dass bei korrekt aufgeschobener Hülse die Hülse und die Markierung aneinander stoßen.

Um die korrekte Position der Hülse auf dem Schlauch für den Werker leichter erkennbar zu machen, kann es sich als vorteilhaft erweisen, wenn die axiale Ausdehnung der Markierung ein Vielfaches des Abstandes zwischen Markierung und Hülse beträgt.

Auch kann es sich hierbei als vorteilhaft erweisen, wenn die Ausdehnung der Markierung in Umfangsrichtung ein Mehrfaches des Abstandes zwischen Markierung und Hülse entspricht.

Weiterhin kann es sich als günstig erweisen, wenn die Markierung im Wesentlichen streifenförmig ist. Dann ist die Markierung für den Werker gut zu erkennen. Von Vorteil kann es sich dabei erweisen, wenn die Markierung sich in Umfangsrichtung erstreckt. Dann kann auch gleichzeitig überprüft werden, ob die Hülse gerade aufgeschoben wurde.

Dabei kann es sich auch als vorteilhaft erweisen, wenn die Markierung ringförmig umläuft. Durch eine ringförmige Gestaltung lässt sich noch leichter überprüfen, ob die Hülse voll umfänglich korrekt sitzt. Gerade bei zylindrischer Gestaltung der Hülse mit ringförmiger Gestaltung des Endes der Hülse kann der korrekte Sitz der Hülse sehr genau überprüft werden.

Ja nach Gestaltung der Hülse kann die Markierung auch anders verlaufen. Von Vorteil kann es jedoch sein, wenn die Markierung sich im Wesentlichen parallel zu einem Endabschnitt der aufgeschobenen Hülse erstreckt. Dadurch lässt sich der korrekte Sitz der Hülse überprüfen.

Um die Erkennbarkeit der Markierung zu verbessern, kann es sich als vorteilhaft erweisen, wenn die radiale Ausdehnung der Markierung zumindest dem Abstand zwischen Markierung und aufgeschobener Hülse entspricht, vorzugsweise wenigstens ein Millimeter. Dadurch ergibt sich ein deutliches Abheben der Markierung von der Außenfläche des Schlauchs.

In einer vorteilhaften Weiterbildung der Erfindung können in Umfangsrichtung mehrere voneinander beanstandete Markierungen vorgesehen sein. Dadurch kann an mehreren Stellen auf dem Schlauch der korrekte Sitz der Hülse überprüft werden.

In einer vorteilhaften Weiterbildung der Erfindung kann die Hülse wenigstens eine Markierung am vom Schlauchende abgewandten Ende aufweisen. Dadurch lässt die Ausrichtung der Hülse in Umfangsrichtung leicht überprüfen.

Von Vorteil kann es dabei sein, wenn die Markierungen von Schlauch und Hülse bei vollständig aufgeschobener Hülse miteinander fluchten. Dadurch lässt sich der korrekte Sitz der Hülse leichter überprüfen.

In einer vorteilhaften Weiterbildung der Erfindung kann die Hülse als Kupplungshülse ausgebildet sein.

Auch kann es sich als vorteilhaft erweisen, wenn der Schlauch elastomeres Material aufweist. Insbesondere kann hierbei die Außenfläche durch elastomeres Material gebildet werden.

Auch kann es sich als vorteilhaft erweisen, wenn die Markierung an der Außenfläche durch Vulkanisation hergestellt ist. Dadurch kann die Markierung während des Herstellens des Schlauchs aufgebracht werden.

Weiterhin bezieht sich die Erfindung auch auf eine Schlauchkupplung mit einem Schlauch nach einem der vorangegangenen Ansprüche.

Ferner bezieht sich die Erfindung auf ein Verfahren zum Montieren einer Hülse auf einem Schlauch, wobei der Schlauch eine Außenseite und ein Schlauchende sowie zumindest eine Markierung aufweist, die vom Schlauchende beabstandet ist und die Hülse auf das Schlauchende aufgeschoben wird, so dass sie die Außenfläche abschnittsweise übergreift. Um die erfindungsgemäßen Vorteile zur ermöglichen, ist vorgesehen, dass bei vollständig aufgeschobener Hülse die Markierung entweder benachbart der Hülse vollständig sichtbar oder vollständig verdeckt ist.

Nachfolgend wird die Wirkungsweise der Erfindung anhand eines Ausführungsbeispiels näher erläutert.

Es zeigen:
- Fig. 1: Den erfindungsgemäßen Schlauch;
- Fig. 2: den erfindungsgemäßen Schlauch aus Figur 1 mit aufgeschobener Hülse.

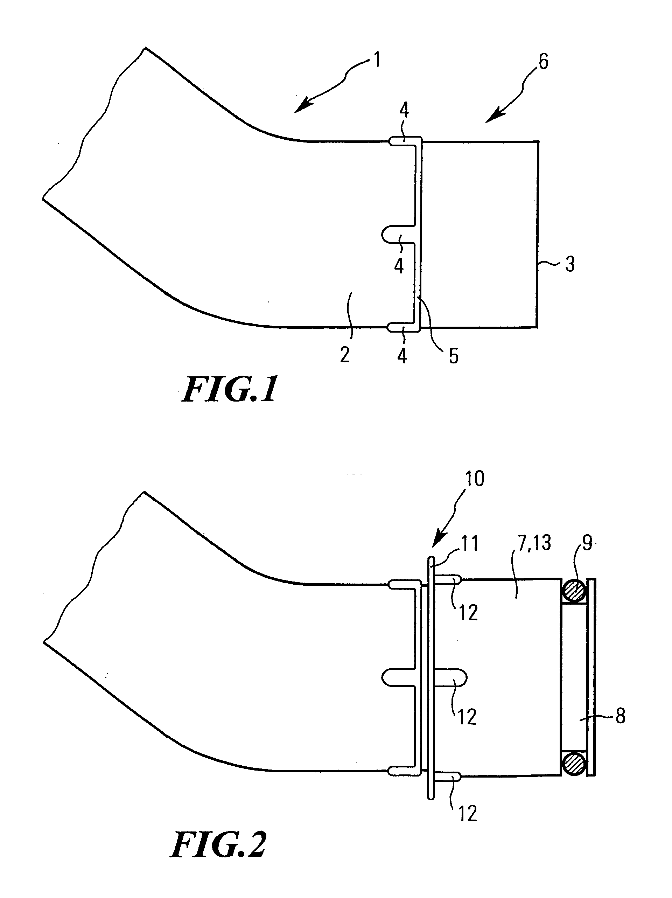

Figur 1 zeigt den erfindungsgemäßen Schlauch 1 in einer Seitenansicht. Bei dem Schlauch handelt es sich um einen mehrschichtigen Elastomerschlauch, der als Krümmerschlauch für Kraftfahrzeuge zum Einsatz kommt. Der Schlauch 1 verfügt über eine Außenfläche 2 und ein Schlauchende 3. Im Querschnitt gesehen ist der Schlauch im Wesentlichen ringförmig. Die Außenfläche des Schlauchs wird durch eine Außenschicht aus elastomerem Material, wie z. B. Kautschuk gebildet.

Vom Schlauchende 3 beabstandet befinden sich mehrere Markierungen 4, die einstückig mit einer ringförmigen Markierung 5 ausgebildet sind. Die Markierungen 4 und 5 sind einstückig mit der Außenfläche 2 ausgebildet und treten gegenüber der Außenfläche 2 in radialer Richtung vor. Die Höhe in radialer Richtung der Markierungen gegenüber der Außenfläche des Schlauchs beträgt ca. 1 mm. In axialer Richtung des Schlauchs beträgt die Länge der Markierung ca. 8 mm und in Umfangsrichtung beträgt die Breite der Markierung 4 ca. 5 mm. Andere Abmessungen sind denkbar. Es soll lediglich sichergestellt werden, dass die Markierungen deutlich gegenüber der Außenfläche zum Vorschein kommen.

Die Markierungen 4 sind durch die ringförmige Markierung 5 miteinander verbunden, die ebenfalls eine Höhe gegenüber der Außenfläche von ca. 1 mm und in axialer Richtung eine Breite von ca. 2 mm aufweist. Die ringförmige Markierung 5 erstreckt sich dabei in Umfangsrichtung im Wesentlichen senkrecht zur axialen Längserstreckung des Schlauchs 3 in einem Aufschiebebereich 6 des Schlauchs 1.

In Figur 2 ist der erfindungsgemäße Schlauch 1 mit einer aufgeschobenen Hülse 7 dargestellt. Bei dieser Hülse 7 handelt es sich um einen Kupplungshülse. Diese wird verwendet, um den Schlauch mit einem Gegenstück zur Kupplungshülse zu verbinden. Die Hülse 7 besteht aus Metall und wir z. B. im Tiefziehverfahren hergestellt. Alternativ können auch Kunststoff oder andere Materialien zum Einsatz kommen. Die Hülse verfügt über eine umlaufende Nut 8, in der ein Dichtring 9 aufgenommen ist. Die Gestaltung der Hülse ist hierbei lediglich beispielhaft. Auch andere Gestaltungen der Hülse sind möglich. Im Bereich eines Endabschnitts 10 der Hülse, der bei aufgeschobener Hülse vom Schlauchende 3 beabstandet ist, verfügt die Hülse über einen flanschartig umlaufenden Rand 11, der sich im Wesentlichen radial erstreckt und Aufnahmen 12, die gegenüber einer Hülsenaußenfläche 13 vorstehen und die gleiche Wandstärke wie die Hülse selbst aufweisen. Durch diese Gestaltung werden durch die Aufnahmen 12 zwischen Hülse 7 und der Außenfläche 2 des Schlauchs 1 Hohlräume gebildet, deren Abmessungen im Wesentlichen den Abmessungen der Markierungen 4 entsprechen.

Neben der vorstehend erwähnten beispielhaften Gestaltung der Hülse kann die Hülse auch als Anschlussstutzen ausgebildet sein oder über z. B. radiale Öffnungen oder Längsschlitze verfügen. Ganz allgemein bildet die Hülse eine Aufnahme für den Schlauch.

Die Hülse 7 ist zur Montage auf dem Schlauch 1 auf den Aufschiebebereich 6 aufschiebbar, wobei die Hülse 7 zumindest während des Aufschiebens in Umfangsrichtung verdrehbar ist. Während des Aufschiebens kann die Hülse dann in die in Figur 2 dargestellte Position gebracht werden, wobei die Aufnahmen 12 jeweils mit den Markierungen. 4 fluchten. Gleichzeitig erstreckt sich der Rand 11 parallel zur ringförmigen Markierung 5. Der Abstand zwischen der Hülse 7 und den Markierungen 4, bzw. 5, bzw. zischen dem Rand 11 und den Markierungen 4 und 5 beträgt ca. 1 mm oder weniger. Durch diese Abmessungen lässt sich die richtige Positionierung der Hülse 7 auf dem Schlauch 2 durch einen Werker optisch leicht erfassen. Die Position 7 der Hülse auf dem Schlauch 2 kann auch so festgelegt werden, dass der Rand 11, bzw. der Endabschnitt der Hülse 7 bei korrekt aufgeschobener Hülse 7 direkt an die ringförmige Markierung 5 oder die Markierungen 4 angrenzt. Die Markierungen und die Hülse sind dann unmittelbar benachbart. Die Gestaltung wird dabei jedoch von den erforderlichen Fertigungstoleranzen bestimmt. Die Hülse 7 kann zudem auch in einer alternativen Ausführungsform über einen Innenflansch verfügen, der mit dem Schlauchende 3 in Anlage bringbar ist, sofern die Hülse 7 vollständig aufgeschoben ist. Anhand der Positionierung des Endabschnitts 10 relativ zu den Markierungen kann dann leicht überprüft werden, ob die Hülse richtig sitzt.

Bei vollständig aufgeschobener Hülse 7 sind somit die Markierungen 4 oder 5 stets vollständig sichtbar.

Zum Verbinden von Schlauch und Hülse werden Schlauch und Hülse gegeneinander verpresst. Hierbei kann etwas Material des Schlauchs aus der Hülse quellen. Dadurch kann es vorkommen, dass sich der Abstand zwischen Hülse und Markierung durch das Verpressen etwas vergrößert. Aufgrund der Materialkenntnis und der Kenntnis der Materialverschiebungen während des Verpressens kann dann mit der Markierung auch festgestellt werden, ob das Verpressen korrekt durchgeführt wurde.

In einer alternativen Ausführungsform können die Markierungen 4 oder 5 auch so angeordnet sein, dass sie bei vollständig aufgeschobener Hülse 7 gerade vollständig nicht mehr sichtbar sind. Sichtbarkeit bezieht sich hierbei im Wesentlichen auf eine Sichtweise radial auf den Schlauch. Die Markierungen 4 können dann in den Aufnahmen 12 aufgenommen sein. Dadurch lässt sich dann auch leicht überprüfen, ob die Hülse in Umfangsrichtung richtig sitzt. Eine solche Gestaltung der Markierungen eignet sich insbesondere für Hülsen, die im vollständig aufgeschobenen Zustand mit einem Innenflansch am Schlauchende anliegen.

Die Gestaltung der Markierungen kann je nach Einsatzzweck unterschiedlich sein. Es können auch nur Markierungen 4 oder aber eine ringförmige Markierung 5 verwendet werden.

Nachfolgend wird die Wirkungs- und Funktionsweise näher erläutert:

Die Herstellung des Schlauchs erfolgt in bekannter Weise durch Vulkanisation. Bereits während des Herstellens können die Markierungen 4 und 5 in die Außenfläche des Schlauchs eingebracht werden. Sie sind dann permanent vorhanden. Zur Montage der Hülse 7 auf den Schlauch 1 nimmt ein Werker den Schlauch in die Hand und kann dann mit seinen Fingern die Markierung ertasten. Dadurch ist es ihm leicht möglich, die Lage des Schlauchs relativ zur Hülse festzustellen. Während des Aufschiebens der Hülse kann die Hülse in Umfangsrichtung verdreht werden, solange bis die Aufnahme 12 der Hülse mit den Markierungen 4 fluchten. Gleichzeitig schiebt der Werker die Hülse 7 soweit auf, bis die Hülse 7 mit ihrem Endabschnitt 10 den Markierungen benachbart ist. Der Abstand zwischen Endabschnitt 10 und Markierungen 4 oder Markierungen 5 stellt dem Werker hierbei Informationen bereit, die ihn über die Richtigkeit des Positionierens des Schlauchs informieren. Erst wenn Endabschnitt 10 und Markierungen 4 oder 5 nahe beieinander liegen, ist die Hülse 7 richtig positioniert.

Durch die erfindungsgemäße Gestaltung des Schlauchs vereinfacht sich zum einen die Monatage des Schlauchs, da die Markierungen leicht feststellbar sind, und andererseits vereinfacht sich auch die Herstellung des Schlauchs, das zusätzliche Druckverfahren zum Aufbringen von Markierungen auf die Oberfläche des Schlauchs nicht mehr erforderlich sind.

## Patentansprüche

1. Schlauch, vorzugsweise Krümmerschlauch für Kraftfahrzeuge, der eine Außenfläche (2) und ein Schlauchende (3) sowie an der Außenfläche (2) zumindest eine Markierung (4, 5) aufweist, die vom Schlauchende beabstandet ist, und mit einer auf das Schlauchende aufgeschobenen Hülse (7), die die Außenfläche abschnittsweise übergreift, **dadurch gekennzeichnet, dass** die Markierung wenigstens abschnittsweise gegenüber der Außenfläche vorstehend oder zurückgezogen ausgebildet ist und bei korrekt aufgeschobener Hülse entweder die Markierung benachbart zur Hülse vollständig sichtbar oder vollständig durch die Hülse verdeckt ist.

2. Schlauch nach Anspruch 1, **dadurch gekennzeichnet, dass** die Markierung gegenüber der Außenfläche vorsteht.

3. Schlauch nach Anspruch 1 oder 2, **dadurch gekennzeichnet, dass** die Hülse in Umfangsrichtung des Schlauchs zumindest während des Aufschiebens verdrehbar ist.

4. Schlauch nach einem der vorangegangenen Ansprüche, **dadurch gekennzeichnet, dass** der Abstand zwischen Markierung Hülse bei aufgeschobener Hülse höchstens 1 mm beträgt.

5. Schlauch nach einem der vorangegangenen Ansprüche, **dadurch gekennzeichnet, dass** die axiale Ausdehnung der Markierung ein Vielfaches des Abstandes zwischen Markierung und Hülse beträgt.

6. Schlauch nach einem der vorangegangenen Ansprüche, **dadurch gekennzeichnet, dass** die Ausdehnung der Markierung in Umfangsrichtung ein Mehrfaches des Abstandes zwischen Markierung und Hülse entspricht.

7. Schlauch nach einem der vorangegangenen Ansprüche, **dadurch gekennzeichnet, dass** die Markierung im Wesentlichen streifenförmig ist.

8. Schlauch nach einem der vorangegangenen Ansprüche, **dadurch gekennzeichnet, dass** die Markierung sich in Umfangsrichtung erstreckt.

9. Schlauch nach einem der vorangegangenen Ansprüche, **dadurch gekennzeichnet, dass** die Markierung ringförmig verläuft.

10. Schlauch nach einem der vorangegangenen Ansprüche, **dadurch gekennzeichnet, dass** die Markierung sich im Wesentlichen parallel zu einem Endabschnitt (10) der aufgeschobenen Hülse erstreckt.

11. Schlauch nach einem der vorangegangenen Ansprüche, **dadurch gekennzeichnet, dass** die radiale Ausdehnung der Markierung zumindest den Abstand zwischen Markierung und aufgeschobener Hülse entspricht, vorzugsweise wenigstens 1 mm.

12. Schlauch nach einem der vorangegangenen Ansprüche, **dadurch gekennzeichnet, dass** in Umfangsrichtung mehrere voneinander beabstandete Markierungen vorge-. sehen sind.

13. Schlauch nach einem der vorangegangenen Ansprüche, **dadurch gekennzeichnet, dass** die Hülse eine Markierung am vom Schlauchende abgewandten Endabschnitt aufweist.

14. Schlauch nach einem der vorangegangenen Ansprüche, **dadurch gekennzeichnet, dass** die Markierung von Schlauch und Hülse bei vollständig aufgeschobener Hülse miteinander fluchten.

15. Schlauch nach einem der vorangegangenen Ansprüche, **dadurch gekennzeichnet, dass** die Hülse als Kupplungshülse ausgebildet ist.

16. Schlauch nach einem der vorangegangenen Ansprüche, **dadurch gekennzeichnet, dass** der Schlauch elastomeres Material aufweist.

17. Schlauch nach einem der vorangegangenen Ansprüche, **dadurch gekennzeichnet, dass** die Markierung an der Außenseite durch Vulkanisation hergestellt ist.

18. Schlauchkupplung mit einem Schlauch nach einem der vorangegangenen Ansprüche.

19. Verfahren zum Montieren einer Hülse auf einen Schlauch, wobei der Schlauch eine Außenseite und ein Schlauchende sowie zumindest eine Markierung aufweist, die vom Schlauchende beabstandet ist und die Hülse auf das Schlauchende aufgeschoben wird, so dass sie die Außenfläche übergreift, **dadurch gekennzeichnet, dass** bei vollständig aufgeschobener Hülse die Markierung entweder benachbart der Hülse vollständig sichtbar oder vollständig verdeckt ist.
